# FASCICULE DE BREVET EUROPEEN

(11) **EP 2 834 207 B1**
(45) Date de publication et mention de la délivrance du brevet: **01.05.2019**
(21) Numéro de dépôt: 13714310.3
(22) Date de dépôt: 05.04.2013
(51) Int. Cl.: C04B 40/00, C04B 28/04

(54) **ADJUVANT POUR COMPOSITIONS HYDRAULIQUES**
HILFSSTOFF FÜR HYDRAULISCHE ZUSAMMENSETZUNGEN
ADJUVANT FOR HYDRAULIC COMPOSITIONS

(30) Priorité: 05.04.2012 FR 1253165
(43) Date de publication de la demande: 11.02.2015
(73) Titulaire: Chryso S.A.S., 92440 Issy-Les-Moulineaux (FR)
(72) Inventeur: DARGUY, Sandra, F-91150 Etampes (FR); BABAYAN, David, CH-5032 Aarau Rohr (CH)
(74) Mandataire: Lavoix
(86) Numéro de dépôt international: PCT/EP2013/057231
(87) Numéro de publication internationale: WO 2013/150145

(56) Documents cités:
- EP-A1- 2 075 240
- WO-A1-01/90024
- WO-A1-2010/026155
- CN-A- 101 077 830
- FR-A1- 2 958 931
- JP-A- 2001 058 863
- US-A1- 2004 209 979

## Description

La présente invention concerne un adjuvant, un procédé pour sa préparation et son utilisation pour accélérer la prise de compositions hydrauliques.

### [Etat de la technique]

Il est habituel d'ajouter à des compositions hydrauliques des adjuvants afin d'en moduler les propriétés pendant la mise en oeuvre et après le durcissement.

Il est ainsi connu de modifier les caractéristiques de prise hydraulique par ajout d'accélérateurs de prise et de retardateurs de prise.

L'accélérateur de prise est économiquement particulièrement intéressant puisqu'il permet d'augmenter la cadence de fabrication et permet de travailler également en conditions hivernales.

Certains sels, notamment les sels alcalins comme le chlorure de sodium ou des sels alcalino-terreux comme le chlorure de calcium, sont largement utilisés à titre d'accélérateurs de prise et de durcissement de compositions hydrauliques à base de ciment Portland.

La capacité de ces sels à améliorer les résistances mécaniques en compression peut toutefois être limitée dans le cas des ciments à faible teneur en clinker, ces sels accélérant plus particulièrement l'hydratation des phases du clinker.

Il est également connu, par exemple de WO0198227, que des particules minérales sous forme colloïdale peuvent apporter une résistance mécanique intéressante et ont par ailleurs un effet accélérateur de prise. Cependant, l'effet sur la résistance mécanique apparaît tardivement, environ 6h après la prise.

Or il est connu, par exemple de l'ouvrage « Techniques de l'Ingénieur, Traité Génie des procédés », J 2 185-1, Section 3.2.), que les dispersions colloïdales comme les sols sont facilement déstabilisées, notamment en présence de sels, ce qui conduit à une agrégation des particules.

Selon WO 98/12149, l'agrégation de silice colloïdale peut engendrer une encapsulation de particules de ciment ce qui a pour effet de réduire la résistance à la compression à long terme.

La demande WO 01/90024 décrit l'addition conjointe d'un sol de silice et d'un superplastifiant en vue de prolonger l'ouvrabilité et de limiter le phénomène de ressuage (« bleeding ») d'une composition de béton fluide.

La demande WO 2008/046831 décrit des dispersions stables en milieu alcalin comprenant un sol de silice précipitée et un plastifiant pour améliorer la résistance à la compression au jeune âge.

### [Problème technique]

Le but de l'invention est de proposer un adjuvant à base de nanoparticules minérales aux fins d'accélérer la prise de compositions hydrauliques qui soit plus économique.

Un autre but est de proposer un tel adjuvant sous forme de formulation stable.

### [Résumé de l'invention]

Les buts évoqués ci-dessus sont atteints selon l'invention en associant dans un adjuvant des nanoparticules minérales, un accélérateur de prise et un polymère dispersant.

En effet, la présence d'un accélérateur de prise outre les nanoparticules minérales permet de réduire le dosage en nanoparticules et d'optimiser ainsi le coût. De manière inattendue, il a été constaté qu'il est possible d'obtenir une formulation stable d'un tel adjuvant même en présence d'un accélérateur de prise sous forme de sel, lorsque l'adjuvant contient en outre un polymère dispersant.

Avantageusement, le polymère dispersant stabilise les nanoparticules également après introduction dans la composition de liant hydraulique, et permet ainsi d'en améliorer l'efficacité.

Enfin, la présence de plusieurs accélérateurs de prise dans l'adjuvant permet de moduler le déroulement dans le temps de l'effet accélérateur. En particulier, il est possible d'obtenir un effet même avant 6h, et d'améliorer ainsi les résistances à la compression aux jeunes et très jeunes âges.

Aussi, selon un premier aspect, l'invention vise un procédé de préparation d'une composition hydraulique à base de ciment comprenant l'addition d'un dosage approprié d'un adjuvant sous forme de dispersion aqueuse, comprenant:
- des nanoparticules minérales;
- un accélérateur de prise de compositions hydrauliques ; et
- un polymère dispersant,
dans lequel le pH est compris entre 2 et 11,
dans lequel les nanoparticules minérales sont choisies parmi les nanoparticules de silice, d'alumine et de carbonate de calcium, éventuellement modifiées,
à la composition hydraulique.

De préférence, il s'agit de nanoparticules de silice ou d'alumine. Elles peuvent en particulier être contenues dans un sol.

Les nanoparticules peuvent présenter une charge, notamment une charge négative, et donc être anioniques.

L'adjuvant peut comporter notamment 1 à 95%, de préférence 5 à 50% et tout particulièrement 5 à 20 % en poids de nanoparticules.

De préférence, l'accélérateur de prise est choisi parmi le glycérol, un sel de métal alcalin, de métal alcalino-terreux, ou d'aluminium; une alkanolamine ou leurs combinaisons.

L'accélérateur de prise peut être en particulier un sel du calcium choisi parmi le chlorure de calcium, le thiocyanate de calcium, le nitrite de calcium et le nitrate de calcium.

En variante, l'accélérateur de prise peut être une alkanolamine choisie parmi la diéthanol amine, la méthyldiéthanol amine, la triéthanol amine, la tétrahydroxyéthylène éthylène diamine ou la triisopropanol amine.

De préférence, le polymère dispersant est choisi parmi les polymères ayant aussi une fonction dispersante du ciment dans les liants hydrauliques tels que les polymères polycarboxyliques polyalkoxylés, les polymères polyphosphonates polyalkoxylés, les polynaphtalènes sulfonates (PNS) ou les polycondensats de formaldéhyde et de mélamine sulfonée (PMS).

Le polymère dispersant peut être anionique, par exemple contenir des motifs à fonction carboxylate, sulfate, sulfonate, phosphate ou phosphonate.

Avantageusement, le polymère dispersant est un polycarboxylate de polyoxyde d'alkylène comprenant au moins 50%, de préférence au moins 75% en nombre d'un enchaînement linéaire aléatoire d'unités structurelles (1) et (2) représentées par les formules suivantes : 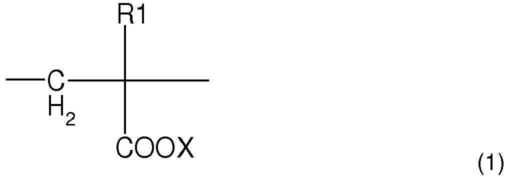 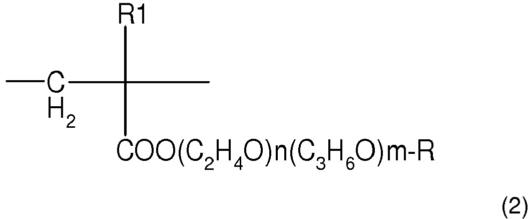 dans lesquelles X représente un atome d'hydrogène, un métal alcalin, un métal alcalino-terreux ou un ammonium, lesdites unités structurelles (1) pouvant être identiques ou différentes ; R1 est un atome d'hydrogène ou un groupement méthyle ; n est un nombre entier variant de 0 à 120, m est un nombre entier variant de 0 à 100 avec m<n, les groupes d'oxyde de propylène pouvant être distribués ou non de façon aléatoire parmi les groupes d'oxyde d'éthylène, R représente un atome d'hydrogène, un groupe alkyle ou alcényle de 1 à 24, de préférence 1 à 18 atomes de carbone, lesdites unités structurelles (2) pouvant être identiques ou différentes ; le rapport du nombre d'unités structurelles (2), sur le nombre total des unités structurelles (1) et (2), étant compris entre 5 et 65%, de préférence entre 40 et 60%.

Particulièrement préféré est un polymère selon les formules ci-dessus, dans laquelle X est un atome d'hydrogène ou un cation alcalino-terreux, notamment calcium.

En variante, le polymère dispersant peut être un polymère cationique, par exemple contenir des motifs portant un ou plusieurs groupements amines primaires, secondaires, tertiaires et/ou quaternaires.

Selon une autre variante, le polymère dispersant peut être un polymère amphotère.

Selon un mode de réalisation préféré, le polymère dispersant est un polymère polycarboxylique polyalkoxylé dont au moins une partie des fonctions carboxyliques se trouvent sous forme de sel, notamment avec un cation multivalent tel que le calcium. En effet, la présence des cations multivalents permet de rendre ce polymère normalement anionique compatible avec des nanoparticules minérales anioniques, lesquelles sont moins onéreuses et plus facilement disponibles, en lui conférant une charge positive.

Avantageusement, l'adjuvant décrit présente un pH compris entre 3 et 10.

Il est également décrit un procédé de préparation d'un adjuvant comprenant, dans cet ordre ou dans un ordre différent, les étapes de :
(1) fourniture d'une solution aqueuse de nanoparticules minérales;
(2) addition d'un polymère dispersant;
(3) ajout d'un accélérateur de prise ; et
(4) si nécessaire, réglage du pH à une valeur de 2 à 11.

Selon un deuxième aspect, l'invention vise un procédé de préparation d'une composition hydraulique, comprenant l'addition d'un dosage approprié de l'adjuvant selon l'invention à la composition hydraulique, de préférence au moment de la gâchée.

Le dosage en adjuvant approprié peut être en particulier de 500 à 10 000 ppm en poids sec, par rapport au poids du liant hydraulique.

Selon un troisième aspect enfin, l'invention vise l'utilisation de l'adjuvant selon l'invention en vue d'accélérer la prise d'une composition hydraulique.

### [Définitions]

Dans le cadre du présent exposé, on entend par le terme « nanoparticules » désigner des particules ayant une taille moyenne en nombre inférieure à 100 nm, et de préférence comprise dans une plage de 5 à 50 nm.

On entend par le terme « sol » une dispersion stable de particules colloïdales au sein d'un liquide. Par définition, les particules colloïdales ont une taille comprise entre 1 nm et 1 µm et englobent ainsi les nanoparticules. Dans un sol, la taille des particules colloïdales doit être suffisamment petite pour que le mouvement brownien contrebalance la gravité et permette le maintien des particules en suspension.

On entend par le terme « dispersion » viser un milieu liquide dans lequel est dispersé un solide, dans le cas présent les nanoparticules minérales.

On entend par le terme « polymère » désigner un composé issu de la polymérisation d'au moins une espèce de monomère. Le plus souvent, lorsqu'il résulte de la polymérisation de plusieurs monomères, les motifs peuvent être présents dans le copolymère avec un enchaînement aléatoire, alterné, statistique ou séquencé. Le polymère obtenu peut être modifié après polymérisation, par exemple par estérification ou neutralisation de groupements carboxyliques.

On entend par le terme « polymère dispersant » désigner un polymère ayant pour effet d'améliorer la dispersion de particules, en particulier de nanoparticules minérales. Généralement, mais pas nécessairement, il possède une partie polaire susceptible d'interagir avec la surface des nanoparticules, par interaction électrostatique, greffage covalent, liaison hydrogène ou autres, et une partie qui, par gêne stérique, limite l'approche des particules minérales entre elles et de ce fait leur agglomération.

On entend par l'expression « polymère cationique » un polymère contenant des groupements cationiques ou des groupements ionisables en groupements cationiques.

On entend par l'expression « polymère anionique » un polymère contenant des groupements anioniques ou des groupements ionisables en groupements anioniques.

On entend par le terme « composition hydraulique » les compositions comprenant de l'eau et au moins un liant hydraulique.

On entend par le terme « liant hydraulique » tout composé ayant la propriété de s'hydrater en présence d'eau et dont l'hydratation permet d'obtenir un solide ayant des caractéristiques mécaniques, notamment un ciment tel qu'un ciment Portland, ciment alumineux, ciment pouzzolanique ou encore un sulfate de calcium anhydre ou semihydraté. Des liants hydrauliques à base de ciment Portland décrits dans la norme NF EN 197-2 peuvent comporter en outre des matériaux pouzzolaniques tels que les laitiers de haut fourneaux, les cendres volantes, les pouzzolanes naturelles, les fumées de silice. Le liant hydraulique peut en particulier être un ciment selon la norme EN 197-1 et notamment un ciment Portland, et en particulier un ciment de type CEM I, CEM II, CEM III, CEM IV ou CEM V selon la norme Ciment NF EN 197-1.

Des liants hydrauliques à base de ciment Portland peuvent en outre comporter des additions minérales. L'expression « additions minérales » désigne les laitiers (tels que définis dans la norme Ciment NF EN 197-1 paragraphe 5.2.2), les laitiers d'aciérie, les matériaux pouzzolaniques (tels que définis dans la norme Ciment NF EN 197-1 paragraphe 5.2.3), les cendres volantes (telles que définies dans la norme Ciment NF EN 197-1 paragraphe 5.2.4), les schistes et argiles calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs mélanges. D'autres ajouts, non actuellement reconnus par la norme Ciment NF EN 197-1 (2001), peuvent aussi être utilisés. Il s'agit notamment des métakaolins, tels que les métakaolins de type A conformes à la norme NF P 18-513, et des additions siliceuses, telles que les additions siliceuses de minéralogie Qz conformes à la norme NF P 18-509.

On entend par le terme « accélérateur de prise » un composé dont la présence dans la composition hydraulique augmente la vitesse de prise hydraulique de la composition, à l'exception des nanoparticules minérales, désignées comme telles. Leurs performances sont indiquées notamment dans la norme américaine ASTM C494.

Dans ce qui suit, et sauf indication contraire, les dosages en adjuvant s'entendent en poids sec, par rapport au poids de liant hydraulique.

### [Description détaillée de l'invention]

L'adjuvant selon l'invention permet la préparation de compositions hydrauliques présentant un temps de prise réduit et de plus une bonne résistance à la compression au jeune âge, notamment à 1, 2, 7 et 28 jours, ainsi qu'aux très jeunes âges, notamment de 4 à 16h, tout en étant économique.

L'adjuvant selon l'invention contient tout d'abord des nanoparticules minérales. Ces nanoparticules minérales ont pour effet l'accélération de la réaction d'hydratation dans la composition hydraulique, ce qui se traduit par un temps de prise réduit. En parallèle, les nanoparticules permettent l'obtention de résistances à la compression au jeune âge très intéressantes, notamment à 1 jour et avant.

Bien que le mécanisme d'action accélératrice de la prise de compositions hydrauliques des nanoparticules ne soit pas complètement élucidé, il est à présent supposé que les nanoparticules servent de sites de nucléation permettant la croissance d'hydrates, en particulier de CSH (acronyme anglais pour « Calcium Silicate Hydrate »).

Les nanoparticules minérales sont de préférence des oxydes, et notamment de la silice, de l'alumine ou alors du carbonate de calcium. Ces nanoparticules peuvent éventuellement être modifiées par inclusion d'autres cations.

La silice peut être notamment une silice précipitée, mais il peut également s'agir de silice pyrogénée.

La taille moyenne en nombre des nanoparticules minérales est de préférence comprise entre 5 et 200 nm, de préférence entre 10 et 50 nm. Selon un mode de réalisation, les nanoparticules sont monodisperses.

Du fait de leur faible taille, la surface spécifique des nanoparticules est assez élevée. De préférence, elle est comprise entre 10 et 700, et en particulier entre 50 et 500 m²/g.

De préférence, les nanoparticules ajoutées se présentent sous forme d'un sol.

De tels sols sont disponibles dans le commerce, et concernant les silices précipitées, vendues sous le nom de BINDZIL (par EKA) ou KLEBOSOL (par AZEM).

La majorité des sols de silice disponibles sont des silices anioniques, en raison de présence à leur surface des groupes Si-OH, stabilisées par des cations tels que sodium, aluminium, ammonium ou hydrogène.

Il existe cependant également des silices cationiques, qui peuvent notamment être obtenues par revêtement en surface avec de l'alumine, qui sont stabilisées par des anions, normalement le chlorure.

La charge de surface de nanoparticules minérales peut être déterminée par la mesure de son potentiel de surface **ξ**.

L'adjuvant comporte de préférence de 1 à 95, avantageusement de 5 à 50, de préférence entre 5 à 20 % en poids sec de nanoparticules minérales.

L'adjuvant selon l'invention comprend en second lieu un polymère dispersant.

La présence dans l'adjuvant d'un polymère dispersant permet de stabiliser les nanoparticules dans la composition hydraulique et optimise ainsi leur efficacité. Par ailleurs, il permet de stabiliser les nanoparticules dans la formulation, notamment vis-à-vis des interactions ioniques avec des sels accélérateur de prise, de sorte à élargir les possibilités de formulation pour l'adjuvant selon l'invention.

Afin d'optimiser son affinité avec les nanoparticules, le polymère dispersant est avantageusement choisi de type cationique lorsque les nanoparticules sont anioniques et vice versa.

Il est dans ce cadre intéressant de pouvoir inverser localement la charge d'un polymère, en formant un complexe avec un ion multivalent de charge opposée à la sienne. Cette inversion locale peut être suffisante pour permettre son adsorption sur une particule de même charge que la charge d'origine du polymère.

De préférence, le polymère dispersant est un polymère ayant aussi une fonction dispersante du ciment dans les liants hydrauliques tels que les polymères polycarboxyliques polyalkoxylés, les polymères polyphosphonates polyalkoxylés, les polynaphtalènes sulfonates (PNS) ou les polycondensats de formaldéhyde et de mélamine sulfonée (PMS).

Le polymère dispersant peut être anionique, par exemple contenir des motifs à fonction carboxylate, sulfate, sulfonate, phosphate ou phosphonate. Ces motifs peuvent faire partie de la chaîne principale ou être portés par un substituant latéral.

Particulièrement préférés sont les homo- ou copolymères d'acides carboxyliques tel que l'acide polyacrylique ou les polymères peignes décrits dans FR 2 776 285, les homo- ou copolymères de monomères sulfonatés tels que l'AMPS de sodium, le vinylsulfonate de sodium ou le styrène sulfonate de sodium, les polymères porteurs de fonctions phosphonates tels que ceux décrits dans EP 0 663 892, ou encore les polymères anioniques d'origine naturelle ou dérivés de matières premières naturelles que le lignosulfonate de calcium ou de sodium, en particulier les lignosulfonates à basse teneur en sucre. On peut aussi mentionner notamment les résines obtenues à partir de formaldéhyde et de naphtalène ou mélamine sulfonées, ou à partir de formaldéhyde, urée et mélamine sulfonées ou encore les polymères dérivés des lignosulfonates ainsi que les polyphosphonates polyalkoxylés.

Les polycarboxylates polyalkoxylés (aussi désignés polycarboxylates de polyoxyde d'alkylène) sont particulièrement préférés car ils présentent un excellent pouvoir dispersant, y compris dans la composition hydraulique.

Particulièrement préféré à titre de polymère dispersant est un polycarboxylate de polyoxyde d'alkylène comprenant au moins 50%, de préférence au moins 75% en nombre d'un enchaînement linéaire aléatoire d'unités structurelles (1) et (2) représentées par les formules suivantes : 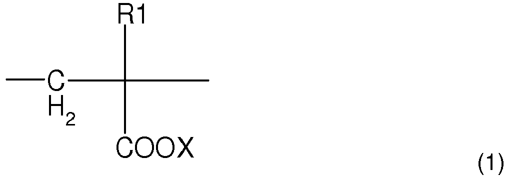 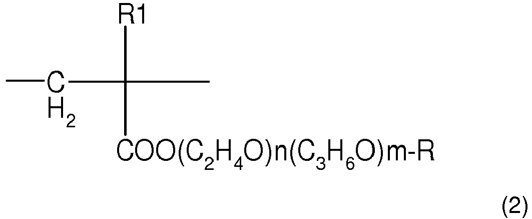 dans lesquelles X représente un atome d'hydrogène, un métal alcalin, un métal alcalino-terreux ou un ammonium, lesdites unités structurelles (1) pouvant être identiques ou différentes ; R1 est un atome d'hydrogène ou un groupement méthyle ; n est un nombre entier variant de 0 à 120, m est un nombre entier variant de 0 à 100 avec m<n, les groupes d'oxyde de propylène pouvant être distribués ou non de façon aléatoire parmi les groupes d'oxyde d'éthylène, R représente un atome d'hydrogène, un groupe alkyle ou alcényle de 1 à 24, de préférence 1 à 18 atomes de carbone, lesdites unités structurelles (2) pouvant être identiques ou différentes ; le rapport du nombre d'unités structurelles (2), sur le nombre total des unités structurelles (1) et (2), étant compris entre 5 et 65%, de préférence entre 40 et 60%.

A titre d'exemple d'autres unités structurelles pouvant être présentes, on peut citer des unités formées à partir de monomères insaturés comprenant des groupements sulfonés, phosphonatés ou des groupements d'esters d'alkyles.

Conformément à une variante préférentielle, le dispersant de type polycarboxylique comprend au moins 90% en nombre d'unités structurelles (1) et (2), plus préférentiellement 100% en nombre d'unités structurelles (1) et (2), en ne prenant pas en compte les unités servant de terminaisons de chaîne liées aux méthodes d'amorçage de polymérisation et de contrôle de longueur de chaîne.

Selon un mode de réalisation préféré, le polymère dispersant est un polymère polycarboxylique polyalkoxylé de formule ci-dessus dans laquelle X = H ou un métal alcalino-terreux et notamment Ca.

En effet, comme déjà évoqué, la présence de cations multivalents confère à ce polymère anionique une charge positive, ce qui le rend particulièrement intéressant pour des nanoparticules minérales anioniques, lesquelles sont moins onéreuses et plus facilement disponibles.

En variante, le polymère dispersant peut être un polymère cationique, par exemple contenir des motifs portant un ou plusieurs groupements amines primaires, secondaires, tertiaires et/ou quaternaires. Ces motifs peuvent faire partie de la chaîne polymère ou être portés par un substituant latéral.

Parmi ces polymères dispersants cationiques, on peut citer en particulier les protéines quaternisées, les polysiloxanes quaternisés, les polymères du type polyamine, polyaminoamide et polyammonium quaternaire, les copolymères vinyl-pyrrolidone-acrylate ou méthacrylate de dialkylaminoalkyle, les copolymères d'acrylamide et de diméthylaminoéthyl acrylate (MADAME) et leurs dérivés, les polyDADMAC (diallyldiméthyl ammonium chlorure) et leurs dérivés, les polysaccharides cationiques tels que les dérivés d'éthers de cellulose ou d'amidon comportant des groupements ammonium quaternaires, les polyalkylènes imines en particulier les polyéthylèneimines, les polymères contenant des motifs vinylpyridine ou vinylpyridinium, les condensats de polyamines et d'épichlorhydrine, les polyuréylènes quaternaires et les dérivés de la chitine.

Selon une autre variante, le polymère dispersant peut être un polymère amphotère ou zwitterionique. Parmi ces polymères dispersants amphotères ou zwitterioniques, on peut citer les polymères porteurs de fonction de type acide aminé, bétaïne, sulfobétaïne ou carboxybétaïne.

De préférence, les polymères dispersants ont une masse molaire moyenne en nombre comprise entre 1 000 et 100 000 g/mol, de préférence entre 7 000 et 50 000 g/mol.

L'adjuvant comporte de préférence de 0,1 à 80, avantageusement de 0,5 à 60, de préférence entre 1 à 30 % en poids sec de polymère dispersant.

L'adjuvant selon l'invention comprend enfin un accélérateur de prise.

De préférence, l'accélérateur de prise est choisi parmi les sels, le glycérol et les alkanolamines.

Particulièrement préférés parmi les accélérateurs de prise sous forme de sels sont les nitrates d'un métal alcalin, d'un métal alcalino-terreux, ou d'aluminium, notamment le nitrate de sodium et de calcium; le nitrite d'un métal alcalin, alcalino-terreux, ou d'aluminium, notamment le nitrite de sodium et de calcium; le thiocyanate d'un métal alcalin, alcalino-terreux ou d'aluminium notamment de thiocyanate de sodium et de calcium; le thiosulfate de métal alcalin, alcalino-terreux ou d'aluminium; l'hydroxyde d'un métal alcalin, alcalino-terreux ou d'aluminium notamment l'hydroxyde de sodium et de calcium; un sel d'acide carboxylique d'un métal alcalin, alcalino-terreux ou d'aluminium (par exemple le formiate de calcium); un halogénure d'un métal alcalin, alcalino-terreux, notamment le bromure et chlorure de sodium et calcium, et leurs combinaisons.

Parmi les sels alcalins ou alcalin-terreux, les sels du sodium et du calcium sont préférés en raison de leur bonne compatibilité avec la composition hydraulique.

Parmi ces sels, le chlorure, le thiocyanate, le nitrite et le nitrate de calcium et le thiocyanate de sodium sont particulièrement préférés.

On préfère les sels ayant une solubilité dans l'eau supérieure à 1g/l.

Le glycérol représente un autre accélérateur efficace.

En variante, l'accélérateur de prise peut être une alkanolamine choisie parmi les dialkanolamines les alkyldialkanolamines, trialkanolamines, et les tetraalkanoldiamines. Ces amines portent de préférence un groupe alkyle ou alkanol droit ou ramifié et comprenant 1 à 4 atomes de carbone, et de préférence 2 à 3 atomes de carbone.

Parmi les alkanolamines sont particulièrement préférées la diéthanolamine, la méthyldiéthanolamine, la triéthanolamine (TEA), la tétrahydroxyéthylène éthylène diamine (THEED) ou la triisopropanolamine (TIPA).

L'adjuvant comporte de préférence de 0,1 à 80, avantageusement de 0,5 à 70, de préférence entre 1 à 60 % en poids sec d'accélérateur de prise.

L'adjuvant selon l'invention se présente sous forme de dispersion aqueuse ayant un pH compris entre 2 et 11, et en particulier compris entre 3 et 10. Ce pH est préféré afin d'assurer la compatibilité des charges du polymère dispersant et des nanoparticules à disperser.

En effet, la charge superficielle des nanoparticules dépend du pH, puisqu'elle implique la réaction des groupes en surface des nanoparticules avec des espèces H⁺ ou OH⁻.

Le pH adapté pour l'adjuvant selon l'invention dépend alors en particulier du point isoélectrique, qui est défini comme le pH auquel les charges des nanoparticules se compensent. Or le point isoélectrique est propre à chaque espèce chimique, puisqu'il vaut environ 3 pour la silice, mais environ 9 pour l'alumine.

L'adjuvant selon l'invention peut par ailleurs contenir d'autres additifs habituels, tels que des entraîneurs d'air, des agents anti-mousse ou des inhibiteurs de corrosion

Il est également décrit un procédé de préparation d'un adjuvant accélérateur pour compositions hydrauliques comprenant, dans cet ordre ou dans un ordre différent, les étapes de :
(1) fourniture d'une solution aqueuse de nanoparticules minérales;
(2) addition d'un polymère dispersant;
(3) ajout d'un accélérateur de prise ; et
(4) si nécessaire, réglage du pH à une valeur de 2 à 11.

Selon un deuxième aspect, l'invention vise un procédé de préparation d'une composition hydraulique, comprenant l'étape d'ajout d'un adjuvant selon l'invention au liant hydraulique au moment de la gâchée.

L'adjuvant est de préférence utilisé au moment de la préparation de la composition hydraulique, par exemple par ajout dans l'eau de gâchage.

De préférence, ce procédé est mis en oeuvre en ce que l'on ajoute l'adjuvant avec un dosage de 500 à 10 000 ppm en poids par rapport au poids du liant hydraulique.

Le procédé de préparation d'une composition hydraulique selon l'invention est particulièrement utile pour des liants hydrauliques, notamment ceux à base de ciment ayant un faible taux de C3A, pour lesquels les accélérateurs conventionnels ont peu d'effet, la silice ayant un effet sur la phase C3S.

Selon un troisième aspect, l'invention vise enfin l'utilisation de l'adjuvant selon l'invention en vue d'accélérer la prise d'une composition hydraulique.

L'invention sera mieux expliquée au regard des exemples qui suivent, donnés à titre non limitatif.

### EXEMPLES

### EXEMPLE 1

On prépare dans un flacon adapté une pâte de ciment de type CEM I 52.5N PMES Le Havre) avec un rapport massique eau sur ciment (E/C) de 0,5, en ajoutant à l'eau de gâchage 1600 ppm de nanoparticules de silice (vendu par sous la référence BINDZIL 515), 500 ppm de glycérol à titre d'adjuvant accélérateur de prise et 2400 ppm de polymère dispersant P partiellement neutralisé par du NaOH, comme précisé dans le tableau 1 ci-dessous. Le polymère P est un polymère polycarboxylique polyalkoxylé comportant 80% de motifs de formule (1) pour lesquels R1 est un méthyle et 80% de motifs de formule (2) pour lesquels R1 est aussi un méthyle, R est un méthyle , n vaut 45 et m vaut 0.

### EXEMPLE 2

On prépare dans un flacon adapté une pâte de ciment de type CEM I 52 (5N PMES Le Havre) avec un rapport massique eau sur ciment (E/C) de 0,5, en ajoutant à l'eau de gâchage 1600 ppm de nanoparticules de silice (vendu par sous la référence BINDZIL 515), 500 ppm de thiocyanate de sodium à titre d'adjuvant accélérateur de prise et 2400 ppm de polymère dispersant P (sous forme de solution, partiellement neutralisé par du NaOH), comme précisé dans le tableau 1 ci-dessous.

### EXEMPLE 3

On prépare dans un flacon adapté une pâte de ciment de type CEM I 52 (5N PMES Le Havre) avec un rapport massique eau sur ciment (E/C) de 0,5, en ajoutant à l'eau de gâchage 1600 ppm de nanoparticules de silice (vendu par sous la référence BINDZIL 515), 500 ppm de thiocyanate de sodium et 500 ppm de glycérol à titre d'adjuvants accélérateurs de prise et 2400 ppm de polymère dispersant P partiellement neutralisé par du NaOH), comme précisé dans le tableau 1 ci-dessous.

### EXEMPLES 4 à 6

On répète les exemples 1 à 3 sauf à remplacer le polymère dispersant par un polymère dispersant P partiellement neutralisé par du Ca(OH)2),

### EXEMPLE 7 (EXEMPLE DE COMPARAISON)

On répète l'exemple 1 sauf qu'on n'ajoute pas d'accélérateur de prise.

### EXEMPLE 8 (EXEMPLE DE COMPARAISON)

On répète l'exemple 4 sauf qu'on n'ajoute pas d'accélérateur de prise.

**Tableau 1 : Composition de l'adjuvant**

| **EXEMPLE** | Nanoparticules de silice | Polymère dispersant | Accélérateur de prise |
|---|---|---|---|
| **1** | BINDZIL 515 | P-NaOH | Glycérol |
| **2** | BINDZIL 515 | P-NaOH | NaSCN |
| **3** | BINDZIL 515 | P-NaOH | Glycérol + NaSCN |
| **4** | BINDZIL 515 | P-Ca(OH)₂ | Glycérol |
| **5** | BINDZIL 515 | P-Ca(OH)₂ | NaSCN |
| **6** | BINDZIL 515 | P-Ca(OH)₂ | Glycérol + NaSCN |
| **7** | BINDZIL 515 | P-NaOH | - |
| **8** | BINDZIL 515 | P-Ca(OH)₂ | - |

### Etude par calorimétrie isotherme

On a réalisé des mesures de calorimétrie isotherme sur les échantillons préparés dans les exemples ci-dessus afin d'étudier l'effet de l'adjuvant selon l'invention sur le processus de prise hydraulique. La calorimétrie isotherme permet de mesurer la chaleur émise en fonction du temps lors des premières heures de la prise d'un liant hydraulique.

Immédiatement après préparation, on introduit le flacon avec la pâte dans un dispositif de calorimétrie isotherme fixé à une température de 20°C puis on enregistre la chaleur émise pendant une durée de 65h.

Les résultats de la mesure sont rassemblés dans le tableau 2 ci-dessous.

Ils mettent en évidence que la chaleur totale en fonction du temps est supérieure pour la pâte comportant l'adjuvant selon l'invention, comparé avec des adjuvants comportant les nanoparticules avec l'accélérateur seul ou avec le polymère dispersant seul.

L'association des nanoparticules de silice avec un polymère dispersant et un accélérateur de prise permet donc d'augmenter l'effet accélérateur à dosage égal en silice.

**Tableau 2 : Flux de chaleur cumulé à 6h et 8h**

| **EXEMPLE** | Q (6h) [J/g] | Q (8h) [J/g] |
|---|---|---|
| **1** | 16,6 | 19,8 |
| **2** | 14,7 | 17,5 |
| **3** | 16,8 | 19,9 |
| **4** | 14,1 | 16,7 |
| **5** | 18,1 | 22,3 |
| **6** | 15,6 | 18,0 |
| **7** | 13,3 | 15,8 |
| **8** | 13,6 | 16,0 |

Les résultats obtenus ci-dessus démontrent qu'en présence des trois composantes de l'adjuvant selon l'invention permet d'augmenter nettement l'effet d'accélération de prise comparé à un adjuvant comportant les nanoparticules en association avec un accélérateur de prise ou avec un polymère dispersant seul.

De manière générale, les résistances à la compression se placent dans le même ordre que les chaleurs dégagées. Il faut donc conclure que les résistances à la compression sont améliorées, notamment à très jeune âge, c'est-à-dire avant 8h.

Les données expérimentales ci-dessus confirment ainsi l'intérêt de l'association de nanoparticules de silice, d'un accélérateur de prise et d'un polymère dispersant dans l'adjuvant selon l'invention.

## Revendications

1. Procédé de préparation d'une composition hydraulique à base de ciment, comprenant l'addition d'un dosage approprié d'un adjuvant sous forme de dispersion aqueuse, comprenant:
- des nanoparticules minérales;
- un accélérateur de prise de compositions hydrauliques ; et
- un polymère dispersant,
dans lequel le pH est compris entre 2 et 11 et
dans lequel les nanoparticules minérales sont choisies parmi des nanoparticules de silice, d'alumine et de carbonate de calcium, éventuellement modifiées
à la composition hydraulique.

2. Procédé selon la revendication 1, dans lequel les nanoparticules sont contenues dans un sol.

3. Procédé selon l'une des revendications 1 à 2, dans lequel les nanoparticules minérales sont anioniques.

4. Procédé selon l'une des revendications 1 à 3, dans lequel l'accélérateur de prise est choisi parmi le glycérol ; un sel de métal alcalin, de métal alcalino-terreux, ou d'aluminium ; une alkanolamine ou leurs combinaisons.

5. Procédé selon la revendication 4, dans lequel l'accélérateur de prise est un sel du calcium choisi parmi le chlorure de calcium, le thiocyanate de calcium, le nitrite de calcium et le nitrate de calcium.

6. Procédé selon la revendication 4, dans lequel l'accélérateur de prise est une alkanolamine choisie parmi la diéthanol amine, la méthyldiéthanol amine, la triéthanol amine, la tétrahydroxyéthylène éthylène diamine ou la triisopropanol amine.

7. Procédé selon l'une des revendications 1 à 6, dans lequel le polymère dispersant est choisi parmi les polymères polycarboxyliques polyalkoxylés, les polymères polyphosphonates polyalkoxylés, les polynaphtalènes sulfonates (PNS) ou les polycondensats de formaldéhyde et de mélamine sulfonée (PMS).

8. Procédé selon l'une des revendications 1 à 7, dans lequel le polymère dispersant est un polymère anionique.

9. Procédé selon l'une des revendications 1 à 8, dans lequel le polymère dispersant est un polycarboxylate de polyoxyde d'alkylène comprenant au moins 50%, de préférence au moins 75% en nombre d'un enchaînement linéaire aléatoire d'unités structurelles (1) et (2) représentées par les formules suivantes : 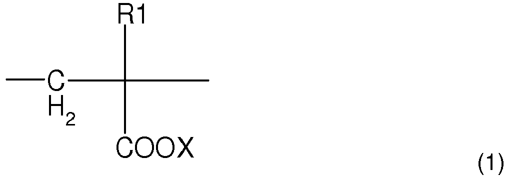 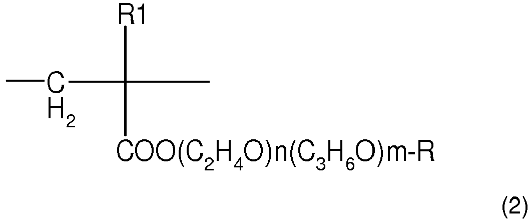 dans lesquelles X représente un atome d'hydrogène, un métal alcalin, un métal alcalino-terreux ou un ammonium, lesdites unités structurelles (1) pouvant être identiques ou différentes ; R1 est un atome d'hydrogène ou un groupement méthyle ; n est un nombre entier variant de 0 à 120, m est un nombre entier variant de 0 à 100 avec m<n, les groupes d'oxyde de propylène pouvant être distribués ou non de façon aléatoire parmi les groupes d'oxyde d'éthylène, R représente un atome d'hydrogène, un groupe alkyle ou alcényle de 1 à 24, de préférence 1 à 18 atomes de carbone, lesdites unités structurelles (2) pouvant être identiques ou différentes ; le rapport du nombre d'unités structurelles (2), sur le nombre total des unités structurelles (1) et (2), étant compris entre 5 et 65%, de préférence entre 40 et 60%.

10. Procédé selon la revendication 9, dans lequel dans les formules (1) et (2) du polymère dispersant, X est un atome d'hydrogène ou un cation alcalino-terreux, notamment calcium.

11. Procédé selon l'une des revendications 1 à 10, dans laquelle l'adjuvant présente un pH compris entre 3 et 10.

12. Procédé selon l'une des revendications 1 à 11, dans lequel on ajoute l'adjuvant avec un dosage de 500 à 10 000 ppm en poids sec par rapport au poids du liant hydraulique.

13. Procédé selon l'une des revendications 1 à 12, dans lequel l'adjuvant comporte 1 à 95% en poids de nanoparticules.

## Patentansprüche

1. Verfahren zur Herstellung einer hydraulischen Zusammensetzung auf Basis von Zement, umfassend die Zugabe einer angemessenen Dosierung eines Adjuvans in Form einer wässrigen Dispersion, umfassend:
- mineralische Nanopartikel;
- einen Einstellungsbeschleuniger der hydraulischen Lösung; und
- ein Dispersionspolymer,
wobei der pH zwischen 2 und 11 ist, und
wobei die mineralischen Nanopartikel ausgewählt sind aus Siliziumdioxid-, Aluminiumoxid- und Calciumcarbonat-Nanopartikeln, wahlweise modifiziert,
zu der hydraulischen Zusammensetzung.

2. Verfahren gemäß Anspruch 1, wobei die Nanopartikel in einem Boden enthalten sind.

3. Verfahren gemäß einem der Ansprüche 1 bis 2, wobei die mineralischen Nanopartikel anionisch sind.

4. Verfahren gemäß einem der Ansprüche 1 bis 3, wobei der Einstellungsbeschleuniger ausgewählt ist aus Glycerin; einem Alkalimetall-, einem Erdalkalimetall- oder einem Aluminiumsalz; einem Alkanolamin oder Mischungen davon.

5. Verfahren gemäß Anspruch 4, wobei der Einstellungsbeschleuniger ein Calciumsalz ausgewählt aus Calciumchlorid, Calciumthiocyanat, Calciumnitrit und Calciumnitrat ist.

6. Verfahren gemäß Anspruch 4, wobei der Einstellungsbeschleuniger ein Alkanolamin ausgewählt aus Diethanolamin, Methyldiethanolamin, Triethanolamin, Tetrahydroxyethylethylendiamin oder Triisopropanolamin ist.

7. Verfahren gemäß einem der Ansprüche 1 bis 6, wobei das Dispersionspolymer ausgewählt ist aus polyalkoxylierten Polycarboxylpolymeren, polyalkoxylierten Polyphosphonatpolymeren, Polynaphthalinsulfonaten (PNS) oder Polykondensaten von Formaldehyd und sulfoniertem Melamin (PMS).

8. Verfahren gemäß einem der Ansprüche 1 bis 7, wobei das Dispersionspolymer ein anionisches Polymer ist.

9. Verfahren gemäß einem der Ansprüche 1 bis 8, wobei das Dispersionspolymer ein Polyalkylenoxidpolycarboxylat ist umfassend mindestens 50 %, vorzugsweise mindestens 75 % in Zahl einer aleatorischen, linearen Aneinanderkettung an Struktureinheiten (1) und (2) dargestellt durch die folgenden Formeln: 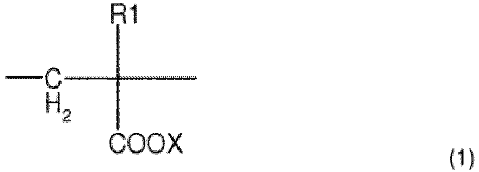 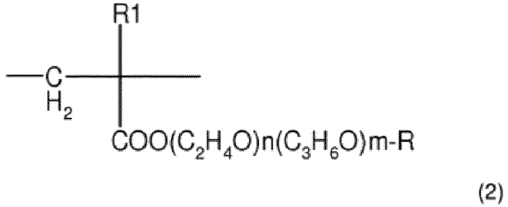 wobei X ein Wasserstoffatom, ein Alkalimetall, ein Erdalkalimetall oder ein Ammonium darstellt, wobei die Struktureinheiten (1) gleich oder verschieden sein können; R1 ein Wasserstoffatom oder eine Methylgruppe ist; n eine ganze Zahl im Bereich von 0 bis 120 ist, m eine ganze Zahl im Bereich von 0 bis 100 mit m<n ist, die Propylenoxid-Gruppen unter den Ethylenoxid-Gruppen aleatorisch verteilt sein können oder nicht, R ein Wasserstoffatom, eine Alkyl- oder AlkenylGruppe von 1 bis 24, vorzugsweise 1 bis 18 Kohlenstoffatomen darstellt, wobei die Struktureinheiten (2) gleich oder verschieden sein können; wobei das Verhältnis der Zahl der Struktureinheiten (2) auf die Gesamtzahl der Struktureinheiten (1) und (2) zwischen 5 und 65 %, vorzugsweise zwischen 40 und 60 % ist.

10. Verfahren gemäß Anspruch 9, wobei, in den Formeln (1) und (2) des Dispersionspolymers, X ein Wasserstoffatom oder ein Erdalkalikation, insbesondere Calcium, ist.

11. Verfahren gemäß einem der Ansprüche 1 bis 10, wobei das Adjuvans einen pH zwischen 3 und 10 aufweist.

12. Verfahren gemäß einem der Ansprüche 1 bis 11, wobei das Adjuvans in einer Dosierung von 500 bis 10 000 ppm Trockengewicht bezogen auf das Gewicht des hydraulischen Bindemittels zugegeben wird.

13. Verfahren gemäß einem der Ansprüche 1 bis 12, wobei das Adjuvans 1 bis 95 Gew.-% Nanopartikel umfasst.

## Claims

1. Process for the preparation of an hydraulic composition based on cement comprising the addition of an appropriate amount of an admixture in the form of an aqueous dispersion, comprising:
- mineral nanoparticles;
- an accelerator for setting of hydraulic compositions; and
- a dispersant polymer,
wherein the pH is comprised between 2 and 11 and
wherein the mineral nanoparticles are selected from silica, alumina and calcium carbonate nanoparticles, optionally modified,
to the hydraulic composition.

2. The process according to claim 1, wherein the nanoparticles are contained in a sol.

3. The process according to one of claims 1 to 2, wherein the mineral nanoparticles are anionic.

4. The process according to one of claims 1 to 3, wherein the setting accelerator is selected from glycerol; an alkaline metal salt, an earth-alkaline metal salt or an aluminum salt; an alkanolamine or combinations thereof.

5. The process according to claim 4, wherein the setting accelerator is a calcium salt selected from calcium chloride, calcium thiocyanate, calcium nitrite and calcium nitrate.

6. The process according to claim 4, wherein the setting accelerator is an alkanolamine selected from diethanol amine, methyldiethanol amine, triethanol amine, tetrahydroxyethylene ethylene diamine or triisopropanol amine.

7. The process according to one of claims 1 to 6, wherein the dispersant polymer is selected from polyalkoxylated polycarboxylic polymers, polyalkoxylated polyphosphonate polymers, polynaphthalene sulfonates (PNS) or formaldehyde and sulfonated melamin polycondensates (PMS).

8. The process according to one of claims 1 to 7, wherein the dispersant polymer is an anionic polymer.

9. The process according to one of claims 1 to 8, wherein the dispersant polymer is a polyalkylene oxide polycarboxylate comprising at least 50%, preferably at least 75% by number of a random linear sequence of structural units (1) and (2) illustrated by the following formulae: 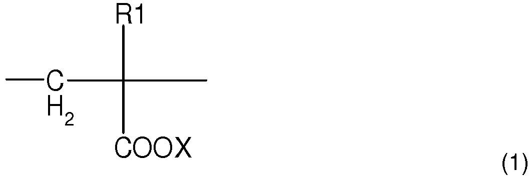 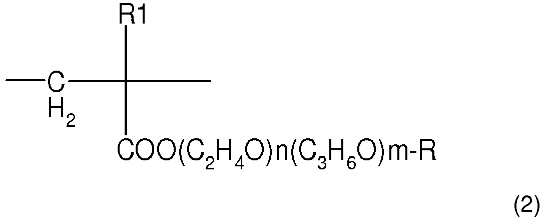 wherein X represents a hydrogen atom, a alkaline metal, an earth-alkaline metal or an ammonium, said structural units (1) may be identical or different; R1 is a hydrogen atom or a methyl group; n is an integer varying from 0 to 120, m is an integer varying from 0 to 100 with m<n, the proplylene oxide groups may be either distributed or not randomly among the ethylene oxide groups, R represents a hydrogen atom, an alkyl or alkenyl group with 1 to 24, preferably 1 to 18 carbon atoms, said structural units (2) may be identical or different; the ratio of the number of structural units (2), over the total number of structural units (1) and (2), being comprised between 5 and 65%, preferably between 40 and 60%.

10. The process according to claim 9, wherein in formula (1) and (2) of the dispersant polymer X is a hydrogen atom or an earth-alkaline cation, notably a calcium cation.

11. The process according to one of claims 1 to 10, wherein the admixture has a pH comprised between 3 and 10.

12. The process according to one of claims 1 to 11, wherein the admixture is added with a dose from 500 to 10,000 ppm by dry weight based on the weight of the hydraulic binder.

13. The process according to one of claims 1 to 12, wherein the admixture includes from 1 to 95% by weight of nanoparticles.
